(19) Europäisches Patentamt
European Patent Office
Office européen des brevets

(11) **EP 3 076 764 B1**

(12) **EUROPEAN PATENT SPECIFICATION**

(45) Date of publication and mention of the grant of the patent:
**06.05.2020 Bulletin 2020/19**

(21) Application number: **16160620.7**

(22) Date of filing: **16.03.2016**

(51) Int Cl.:
***H05B 37/02*** ^(2006.01)

(54) **MOTION DETECTION AND LIGHTING MEANS**

BEWEGUNGSDETEKTION UND BELEUCHTUNGSVORRICHTUNG

MOYENS D'ÉCLAIRAGE ET DE DÉTECTION DE MOUVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.03.2015 GB 201504819**
**16.03.2015 GB 201504824**

(43) Date of publication of application:
**05.10.2016 Bulletin 2016/40**

(73) Proprietor: **Tridonic GmbH & Co KG**
**6851 Dornbirn (AT)**

(72) Inventors:
• **Borsoi, Giulio**
**6850 Dornbirn (AT)**

• **Somaraju, Abhinav**
**6850 Dornbirn (AT)**

(74) Representative: **Rupp, Christian**
**Mitscherlich PartmbB**
**Patent- und Rechtsanwälte**
**Sonnenstraße 33**
**80331 München (DE)**

(56) References cited:
**EP-A1- 1 311 142    CH-A5- 683 478**
**US-A1- 2006 125 624    US-A1- 2013 069 543**
**US-A1- 2014 379 305**

**Description**

The present invention relates to the field of motion detection and of motion sensors or presence sensors. The invention particularly relates to a method for detecting motion and to a device and system for performing such detection.

The use of a motion sensor in combination with lighting means is already known in the state of the art. So-called motion or presence sensors actually react on motion and are connected to lighting means in such a way that light is turned on when motion is detected by the motion sensor. On the other hand, light is turned off after a fixed, user configured, delay time during which no motion is detected.

The task of the motion sensor is to detect and signal a motion in order to control the lighting means according to this signaled motion. Thereby the sensor detects a motion in a known manner as soon as a motion signal is above a threshold, said motion signal reflecting the amount or intensity of motion within the area covered by the sensor. If the motion signal or its amplitude is below the threshold, no motion is detected. On the other hand, a motion signal above said threshold will trigger a motion detection and a corresponding control of the lighting means. It is known that this threshold can be configured so as to achieve a desired sensitivity of the motion sensor.

The behaviour of lighting means controlled on the basis of a motion sensor thus depends on the sensitivity of the motion sensor and on the time delay after which the lighting means can be turned off. It is known to configure the sensitivity and the time delay with potentiometers, dip-switches or with proprietary configuration tools like e.g. IR remote controls. This known configuration is problematic in that potentiometers require the sensor to be accessible, and IR remote controls require the sensor to be visible. Further on, both solutions require additional hardware components.

A further drawback is that the choice of sensitivity and time delay is left to the installer, which means additional work for the installer. Such a choice is rather difficult and cannot be accurate. It can be repeatable only with coarse settings.

The settings also depend on the environment in which the motion sensor is installed. Long time delays and high sensitivity are e.g. necessary in applications where occupants will spend long time in a room without generating large motion, like in an office. On the other hand, short delay time is necessary in corridors where lights are needed only when someone is passing by. That is, it is disadvantageous that each application requires proper, different configuration.

In any case such a known motion sensor will be triggered by a person leaving the monitored area. This is disadvantageous in that the connected lighting means are then switched on for a given period of time even if nobody is present in the area, thereby causing a waste of energy.

US 2014/379305 A1 discloses an occupancy sensor detecting the occupancy state of a monitored area.

US 2006/125624 A1 discloses an intelligent occupancy sensor, such as a Passive InfraRed (PIR) sensor, with variable adaptive timeout.

EP 1311142 A1 discloses a system for controlling a plurality of loads in a room.

CH 683478 A5 discloses an automatically switching light on and off in room - using evaluating unit responding to output signals of passive IR movement sensor and ambient light sensor.

US 2013/069543 A1 discloses Apparatuses, methods and systems for dual-technology occupancy detection.

The present invention proposes an improved method for avoiding the disadvantages mentioned above.

According to an aspect of the invention, it is proposed a method for identifying a presence state P or a non-presence state NP of people in an area covered by a motion sensor, wherein the motion sensor:

- changes autonomously its behaviour depending on ongoing motion sensing, wherein the behaviour of the motion sensor depends on the instantaneous value of a motion signal, said motion signal being measured by the motion sensor and reflecting the amount of motion in the covered area, and on an average value of the motion signal;
- detects a large motion A on the basis of the instantaneous value of the motion signal, wherein the large motion is detected when the instantaneous value of the motion signal is above a first threshold value M;
- detects a no motion on the basis of the average motion signal, wherein no motion is detected when the average motion signal is lower than a second threshold value m;
- detects a small motion on the basis of the average motion signal, wherein the small motion is detected when the average motion signal is above a third threshold value m'; and
- identifies the presence state P when a counter reaches an upper threshold and the non-presence state NP when the counter reaches the value zero;

wherein the counter, preferably initialized at value zero, is increased by a value z when a large motion is detected, is decreased by a value x when no motion is detected, and is increased by a value y when a small motion is detected.

According to a further aspect of the invention, it is proposed a motion sensor for identifying a presence state P or a non-presence state NP of people in an area covered by the motion sensor. The motion sensor comprises a counter, preferably initialized at value zero, wherein the motion sensor is adapted to:

- change autonomously its behaviour depending on ongoing motion sensing, wherein the behaviour of the motion sensor depends on the instantaneous value of a motion signal, said motion signal being measured by the motion sensor and reflecting the amount of motion in the covered area, and on an average value of the motion signal;

- detect a large motion on the basis of the instantaneous value of the motion signal, wherein the large motion is detected when the instantaneous value of the motion signal is above a first threshold value M;
- detect a no motion on the basis of the average motion signal, wherein no motion is detected when the average motion signal is lower than a second threshold value m;
- detect a small motion on the basis of the average motion signal, wherein the small motion is detected when the average motion signal is above a third threshold value m';
- increase the counter by a value z when a large motion is detected;
- decrease the counter by a value x when no motion is detected;
- increase the counter by a value y when a small motion is detected;
- identify the presence state P when the counter reaches an upper threshold; and
- identify the non-presence state NP when the counter reaches the value zero.

Further aspects are evidence from the dependent claims.

This is an improvement vis-à-vis sensors of the state of the art that need to be configured in the field since the user that configures a sensor has no way to determine what the optimal settings are and for this operation the sensor has to be accessible or even visible. The autonomous behaviour change also eliminates the disadvantage that with state of the art sensors the lights always remain on for a time as long as the timer delay after the occupants have gone away.

The behaviour of the motion sensor can depend on the instantaneous value of a motion signal, said motion signal being measured by the motion sensor and reflecting the amount of motion in the covered area, and on an average value of the motion signal.

The motion sensor can detect a large instantaneous motion on the basis of the instantaneous value of the motion signal. It can detect a small average motion on the basis of the average motion signal. Alternatively, it can detect a large average motion on the basis of the average motion signal. The motion sensor can identify a presence state or a non-presence state depending on the detected large instantaneous motion and at least one of the detected small average motion and the detected large average motion.

The motion sensor can change autonomously its behaviour depending on the detection of large instantaneous motion, small average motion and large average motion.

The large instantaneous motion can be detected when the instantaneous motion signal is above a first threshold. The small average motion can be detected when the average motion signal is below a second threshold. The large average motion can be detected when the average motion signal is above a third threshold.

A counter, preferably initialized at the value zero, can be increased by a value z when a large instantaneous motion is detected. The counter can be decreased by a value x when a small average motion is detected. The counter can be increased by a value y when a large average motion is detected.

The presence state can be identified when the counter reaches an upper threshold and the non-presence state can be identified when the counter reaches the value zero.

The upper threshold can correspond to the value z.

The motion sensor can change autonomously its behaviour by modifying at least one of the first threshold, the second threshold, or the third threshold. Alternatively, the motion sensor can change autonomously its behaviour by modifying at least one of the value z, the value x and the value y. Alternatively, the motion sensor can change autonomously its behaviour by modifying at least one of the first threshold, the second threshold, the third threshold, the value z, the value x and the value y.

The behaviour of the motion sensor can be adapted by decreasing the value z and/or by increasing the value x in the case that the counter reaches zero after a detected large instantaneous motion followed by a succession of detected small average motions. Preferably, the counter has been preferably initialized to zero before the detection of the large instantaneous motion.

The behaviour of the motion sensor can be adapted by decreasing the first threshold in case the counter reaches zero after a detection of a large instantaneous motion followed by a successive detection of small and/or large average motions. Preferably, the counter has been preferably initialized to zero before the detection of the large instantaneous motion.

The behaviour of the motion sensor can be adapted by decreasing the first threshold in case the counter reaches the value z after a successive detection of small and/or large average motions without any large instantaneous motion. Preferably, the counter has been preferably initialized to zero before the detection of the large instantaneous motion.

The behaviour of the motion sensor can be adapted by increasing the second threshold in case a small average motion has not been detected since a predetermined time, e.g. since more than one day.

A light source coupled with the motion sensor can be turned on if the presence state is identified, and the light source can be turned off if the non-presence state is identified.

According to a further aspect of the invention, it is proposed a system comprising such a motion sensor, and controlling means connected to the motion sensor for controlling lighting means. The controlling means is adapted to control the lighting means depending on a presence state or a non-presence state identified by a motion sensor.

The controlling means can be adapted to switch on the lighting means if the presence state is detected and to switch it off if the non-presence state is detected.

Preferably, the detection of the presence state or the non-presence state can depend on the history of the motion sensing. This means that the probability of being in the presence state or non-presence state depends on the history of the observed motion.

Preferably, the motion sensor can measure a signal reflecting the amount of motion in the covered area, and classify the measured signal into at least three different event categories comprising a no motion event, a small motion event and a large motion event. The detection of the presence state or the non-presence state can depend on the event category.

Preferably, a no motion event can be identified if the amplitude of the signal is below a no motion threshold, a large motion event can be identified if the signal amplitude is above a large motion threshold, and a small motion event can be identified if the signal amplitude is between the no motion threshold and the large motion threshold.

Preferably, the presence state and the non-presence state are detected by means of a hidden Markov model, the presence state and the non-presence state being states of the hidden Markov model.

Preferably, the hidden Markov model comprises a third transition state between the presence state and the non-presence state.

Preferably, the transition probability from the transition state to the transition state can be zero.

Preferably, the transition probability between the presence state and the non-presence state can be zero.

Preferably, the estimated transitions from the transition state to the presence state or the non-presence state can The invention will be explained in the followings together with Figures.

Fig. 1 shows a schematic representation of a system according to the present invention,

Fig. 2 shows a schematic representation of a motion sensor according to the present invention,

Fig. 3a shows an embodiment for event detection according to the present invention,

Fig. 3b shows an embodiment for event detection according to the present invention,

Fig. 3c shows an embodiment for event detection according to the present invention.

Fig. 4 is a schematic representation of an implementation of a statistical model according to the present invention

Fig. 5 shows an algorithm for determining the most likely state in the model of Figure 4.

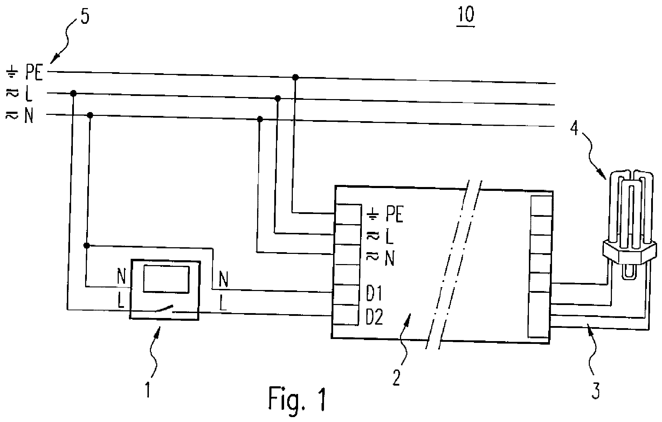

Fig. 1 shows a schematic representation of a system 10 according to the present invention comprising a motion sensor or motion detector 1, a control device 2 as well as a light source or lighting means 4. The light source 4 shown in Fig. 1 is representative of any kind of light source and can e.g. correspond to an LED in form of an organic or inorganic light emitting diode, or to a gas discharge lamp. Instead of one light source 4, the system may comprise a plurality of light sources that can be connected in series, in parallel or according to a more complex combined serial and parallel arrangement.

The light source 4 is connected to the control device 2 by means of a dedicated connection i.e. dedicated wires 3. The control device 2 can also be referred to as an operating device or a ballast and has the function of supplying the light source 4 with electrical energy, i.e. with current. The control device 2 is connected to mains power supply 5 and is adapted to transfer energy to the light source 4 in a known manner. In order to operate the light source 4, the control device 2 can be in the form of a switched-mode power supply and can comprise a switched converter for generating a desired voltage for the light source 4 and a desired current through the light source 4. The switched converter can be a buck converter, a boost converter, a flyback converter, or e.g. a resonance converter.

The motion sensor 1 is adapted to detect moving objects and particularly people. The detection is performed in a given area that is covered by the motion sensor 1, said covered area being the field of view of the sensor. Advantageously, the covered area corresponds to the zone illuminated by the light source 4. Alternatively, the covered area comprises said illuminated zone or is comprised in said illuminated zone. The motion sensor 1 is particularly adapted to sense a change in position of an object or a person within said covered area. The method used by the motion sensor 1 to detect motion is known in the art and can be based on a technology like e.g. passive infrared (PIR) motion detection, microwave, radar, ultrasonic or tomographic motion detection, or video camera motion detection.

The control device 2 comprises an input connection D1, D2 to connect the motion sensor 1. The motion sensor 1 is connected to the mains power supply 5 as well as to the control device 2, such that it can apply to the input connection D1, D2 of the control device 2 a coded voltage that transmits information regarding a detected motion or presence in the covered area. The voltage applied to the input connection D1, D2 is coded in that it can indicate to the control device 2 whether or not a motion has been detected, i.e. whether or not a presence has been identified. E.g. if no motion or no presence is detected, the motion sensor 1 can apply a zero voltage to said input D1, D2, while a voltage of a defined amplitude can be applied when a motion or a presence is detected. E.g. the voltage applied in case of a detected motion or detected presence can be the mains supply voltage. The voltage applied to the input connection D1, D2 can be coded in a different way.

The coded voltage applied at the input connection D1, D2 is decoded by the control device 2. After decoding, the control device 2 controls the light source 4 depending on the decoded information. E.g. the light source 4 is turned on if the decoded information relates to a presence state P, i.e. when the presence of people is detected by the motion sensor 1, and is turned off if the decoded information indicates a no presence state NP. In case of a no presence state, i.e. in case the motion sensor 1 has identified that nobody is present in the covered area, the light source can alternatively be dimmed.

According to the present invention, the presence state P and the non-presence state NP related to the presence of people in the area covered by the motion sensor 1 are detected autonomously by the motion sensor.

The behaviour of the motion sensor 1, i.e. particularly the detection of the presence or no presence state, may change depending on ongoing motion sensing of the motion sensor 1. The detection of the presence state or the non-presence state may depend on the history of the motion sensing.

The motion sensor 1 is adapted to measure a signal, also called motion signal, reflecting the amount or the intensity of motion in the covered area. Such signal, and particularly the generation of such signal, is known in the art. The motion signal is generated by a dedicated sensing unit of the motion sensor 1, said sensing unit being based e.g. on passive infrared (PIR) motion detection, microwave, radar, ultrasonic or tomographic motion detection, or video camera motion detection. If required, the motion signal can be rectified and/or amplified as known in the state of the art.

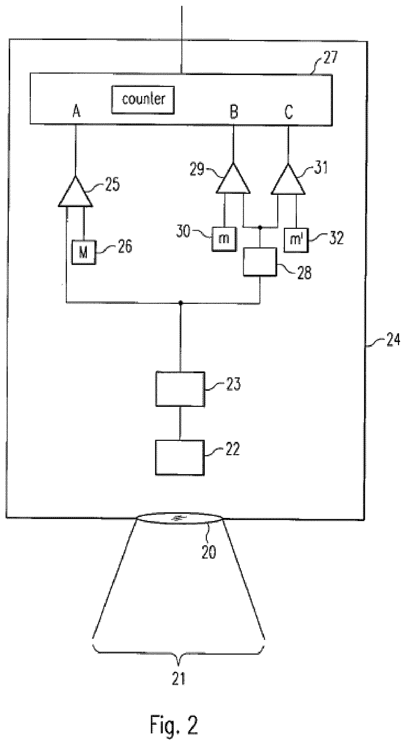

Fig. 2 is a schematic representation of a motion sensor 1 according to an embodiment of the invention.

The motion sensor 1 comprises optical means 20 like a lens for defining the area 21 covered by the motion sensor 1 in which motion can be detected. A sensor 22 generates the motion signal according to e.g. a passive infrared (PIR) motion technology. Other known methods for generating a motion signal reflecting the amount of motion in the covered area 21 can be used. The sensor 22 is coupled to the optical means 20. An optional processing unit 23 can rectify and/or amplify the generated motion signal.

The motion sensor 1 further comprises an evaluation unit 24 for evaluating the generated motion signal. The task of the evaluation unit 24, and particularly of a decision unit 27 of said evaluation unit 24, is to determine whether or not, based on the motion signal, people are present in the covered area 21. The decision unit 27 accordingly detects the above-mentioned presence state P or no presence state NP, and generates the coded voltage for the control device 2 depending on the detection of the presence state P or no presence state NP.

According to an embodiment of the invention, the evaluation unit 24 of the motion sensor 1 is adapted to use the motion signal generated by the sensor 22 and optionally processed by the processing unit 23 in order to perform an event classification.

A first event that can be detected is a large motion event A. The evaluation unit 24 thereby preferably comprises comparing means like a comparator 25 that compares the instantaneous motion signal, i.e. for example the amplitude of said instantaneous motion signal, with a threshold value M that can be stored in a storage unit 26. The output of the comparator 25 is supplied to the decision unit 27 so that the decision unit 27 is able to detect a first event A on the basis of the output of the comparator 25 when the instantaneous motion signal is above the threshold value M.

This first event A corresponds to a large motion within in the area 21 covered by the motion sensor 1. The initial value of the threshold M that is stored in the storage unit 26 can be a predetermined value. If the motion signal, i.e. the instantaneous value of the motion signal, is high enough, a first event A is detected. Preferably, a first event A is detected if the amplitude of the instantaneous motion signal is close to a maximum value of the motion signal.

According to the present invention, this threshold value M can be modified autonomously by the motion sensor 1 to adapt to the environment of the motion sensor 1.

In reaction of such a large motion, preferably in reaction to such a high value of the instantaneous motion signal, the system and particularly the motion sensor understands that at least one person is present in the area covered by the motion sensor 1 and that the light shall be turned on. Therefore in case the first event A is detected, the decision unit 24 preferably generates a coded voltage that is a command to turn on the light source 4. The coded voltage is received by the control device 2 through the input connection D1, D2. The control device correspondingly interprets the coded voltage as a command to turn on the light source 4 and turns on said light source 4.

A second event that can be detected is a no motion event B. The evaluation unit 24 thereby preferably comprises averaging means, for example in form of an integrator 28, adapted to generate an average value of the motion signal.

The output of the integrator 28 is applied to a comparator 29 that compares the average motion signal, i.e. for example the average value of the motion signal amplitude, with a threshold value m that can be stored in a storage unit 30. The output of the comparator 29 is supplied to the decision unit 27 so that the decision unit 27 is able to detect a no average motion event B if the average motion signal is lower than the threshold value m.

A third event that can be identified by the motion sensor is a small motion event C. The output of the integrator 28 can thereby be applied to a comparator 31 that compares the motion signal with a threshold value m' that can be stored in a storage unit 32. The output of the comparator 31 is supplied to the decision unit 27 so that the decision unit 27 is able to detect a small motion C if the average motion signal is smaller than the threshold value m'.

Thereby, the instantaneous value of the motion signal differs from the averaged value of said motion signal. The instantaneous value refers to the current, i.e. instantaneous intensity of motion within the area covered by the sensor. Such an instantaneous value is for example used in the state of the art, in which the light source connected to the motion sensor is turned on as soon as this instantaneous value is higher that a given threshold. On the other hand, the averaged value of the motion sensor consists in values averaged over for example a few seconds. Such an averaged signal is e.g. not used in a known threshold and delay sensor because it would introduce a corresponding delay of a few seconds in the reaction of the sensor: in such a case, the sensor would become slow and react a few seconds after the motion has happened, which is not desired.

In the sense of the present invention, an averaged value of the motion signal therefore refer to an average over a given time period Ta of preferably at least one second, preferably at least two seconds more preferably at least two or more seconds, like for example 5 seconds. On the other hand, the input of the comparator is an instantaneous value of the motion signal amplitude. Thereby it is possible that the processing unit 23 performs an electrical noise reduction and a filtering: however for this task, the sampling frequency and the number of samples are chosen so that the value of the instantaneous motion signal remains instantaneous and at most relates to a few milliseconds.

In a preferred embodiment, the decision unit 24 detects preferably the three different events that are a large instantaneous motion A, a no average motion B, and a small average motion C. Alternatively, the decision unit 24 may be able to detect only parts of these three events.

As shown in Fig. 2, the decision unit 27 comprises a counter. The value of the counter is used to identify the presence state P or the non-presence state NP. The value of the counter is initialized at the value zero. If the counter reaches a given value z, the motion sensor 1 generates a coded voltage for turning on the light source 4. On the other hand, if the counter decreases and reaches the value zero again, the motion sensor 1 generates a coded voltage for turning off the light source 4.

The counter value is modified as follows. Upon detection of a large instantaneous motion A by the decision unit 27, the value of the counter is increased by the value z. Preferably, this value z is also the maximum value that can be taken by the counter. Upon detection of a small motion B, the value of the counter is decreased by a value x. Finally, upon detection of a small motion C, the value of the counter is increased by a value y. This value y may be different from the value x.

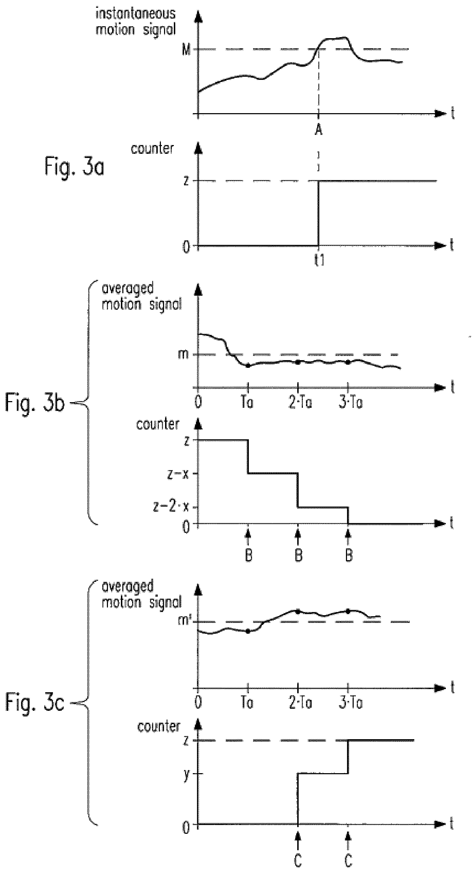

A possible evolution of the counter value is illustrated in Fig. 3a, 3b, and 3c.

Fig. 3a shows an embodiment wherein the system, particularly the motion sensor 1, detects a large motion A as soon as the instantaneous value of the motion signal is higher than said threshold M. The counter value is initialized at the value zero for example when the motion sensor 1 is turned on and, as soon as the large instantaneous motion A is detected, the counter is increased to the value z. Once the counter has the value z, further detection of large motions A will preferably not affect the counter since the value z is preferably the maximum value of the counter. Fig. 3a shows that after the first detection of the event A, the counter remains at its maximum value z. Consequently, the light source 4 is switched off from t=0 to t=t1 and switched on at t=t1.

Fig. 3b shows how the counter is influenced by the detection of a no motion B. The embodiment shows that in case the second event B is detected, the counter is decreased by the value x, wherein if the counter reaches the value zero, the light source 4 is turned off.

Fig. 3b shows particularly an embodiment, in which several no average motions B are detected successively. At the time point t=0, the counter has the value z, which means that for example the first event A has been detected prior to this time point and that the light source is on at t=0. The shown signal is here the averaged motion signal, preferably corresponding to the amplitude of the motion signal averaged over a time period Ta, wherein this time period Ta corresponds preferably to at least one second or a few seconds as described above. In the embodiment of Fig. 3b, several values of the averaged motion signal are therefore calculated at t=Ta, t=2. Ta, and 3. Ta. These three averaged values are all below the second threshold m, such that the second event B is detected respectively at the moments Ta, 2.Ta and 3.Ta.

As a reaction of the detection of said second event B, the counter is decreased by the value x. After t=Ta, the counter as the positive value z-x and the light source is still lightening. After the moment t=2.Ta, the value of the counter z-2.x is still positive and the light source 4 is still lightening and the light source 4 is still lightening. As soon as the counter reaches the value zero or falls below zero, the light source is turned off. This happens in the embodiment of Fig. 3b upon the third detection of the small average motion B at the moment t=3.Ta.

In fact, if the counter falls below zero and presents a negative value, the counter is preferably re-initialized to the value zero and the light source 4 is kept turned off.

Fig. 3c shows how the counter is influenced by the detection of a small average motion C. The embodiment shows that in case the second event C is detected, the counter is increased by the value y, wherein if the counter reaches the value z, the light source 4 is turned off.

In this embodiment, the counter value is zero at the time point t=0. The time period for averaging the motion signal is Ta, so that the motion signal can be compared to the threshold value m' stored in storage unit 32 at the moments t=Ta, t=2.Ta, and 3.Ta. At t=Ta, the value is below the threshold m' such that the counter is not modified. At t=2.Ta and t=3.Ta the value is above said threshold m' so that the counter is successively increased by the value y. At t=3.Ta, the counter is limited to its maximum value and the light source 4 is switched on.

The motion sensor 1 of the present invention in adapted to change autonomously its behaviour depending on ongoing motion sensing. This means among others that the motion sensor 1 changes autonomously its behaviour preferably depending on the ongoing detection of large instantaneous motion A, no motion B and small motion C.

The motion sensor 1 changes preferably its behaviour in an autonomous way, i.e. without any external instruction given by e.g. an operator. This change of behaviour is achieved by modifying at least one of the first threshold M, the second threshold m, the third threshold m', the value z, the value x and the value y.

A first possible adaptation of the motion sensor 1 relates to the particular case that, after the light source 4 is turned on for example as a consequence of a detected large instantaneous motion A, the events that are detected are only small motion events B. The decision unit thus detects a first large motion A that is followed by a succession of no motion events B. The event sequence corresponds to {A, B, B, ..., B}. Correspondingly, the counter will be increased to its maximum value z and then decreased successively by the value x until it reaches the value zero.

The decision unit 27 is adapted to recognize this event succession, and is particularly adapted to recognize that no motions B have caused the counter to decrease from its the maximum value to zero. In this case, the behaviour of the motion sensor 1 is adapted by decreasing the value z and/or increasing the value x.

After this adaptation, a similar event sequence {A, B, B, ..., B} will cause a more rapid switching off of the lamp. This is e.g. advantageous for a corridor application, where motion sensor and light source are installed in a corridor. Indeed, corridors are usually empty except when someone is going through them, but very seldom people stop in corridors. In such an application therefore, the event sequence {A, B, B, ..., B} may occur often. An adaptation consisting in decreasing the value z and/or increasing the value x thus will lead to the situation that the light will turn off much more quickly in said corridor application.

A further autonomous adaptation relates to the detection of a large instantaneous motion A followed by a sequence of small and/or large motions B, C. The corresponding event sequence can be e.g. {A, B, C, C, B, C, C}. In other words, the light source 4 is turned on after a large motion A and is later on turned off after a succession of motions B, C without further large motion A.

In such a scenario, it is possible that the first threshold M for detecting a large motion A may be too high, such that the autonomous adaptation could then consist in reducing the value of the first threshold M.

A further autonomous adaptation is proposed e.g. when the counter, starting from the value zero, reaches its maximum value z without any detected large motion A. In other words, the light source is turned on after a succession of small and/or large average motions B, C. The corresponding event sequence can be e.g. {C, B, C, C, B, C, C}.

In this application, the command i.e. the coded voltage for turning on the light source 4 is delayed because the counter is increased only based on large motions C. The reaction of the system and of the motion sensor can then be speeded up by decreasing the first threshold M for facilitating the detection of the large instantaneous motion A.

A further autonomous adaptation is proposed if no motion B has not been detected by the decision unit 27 since a long time or more generally since a predetermined time of e.g. a few hours, one day or several days. The system indeed expects some quite period from time to time: an adaptation consists then in such a case in increasing the threshold m for increasing the probability of detecting a small motion B. As a consequence, the counter will be decreased by the value x more often. This situation applies for example to an office application, where it is expected that at least during the night the threshold M shall be exceeded.

Regarding the different threshold values, the second threshold m for detection of no small motion B is preferably lower than the first threshold M for detection of a large motion A. Preferably, the third threshold m' can be linked to the second threshold m in such a way that the difference m'-m is a fixed value. Adapting or modifying e.g. the threshold m would thus automatically result in the adaptation or modification of the threshold m'.

The proposed autonomous adaptation thus influences for example how quickly or slowly the light will turn off. The advantage of this solution is that the behaviour of the motion sensor can be adapted without requiring any additional work from an operator.

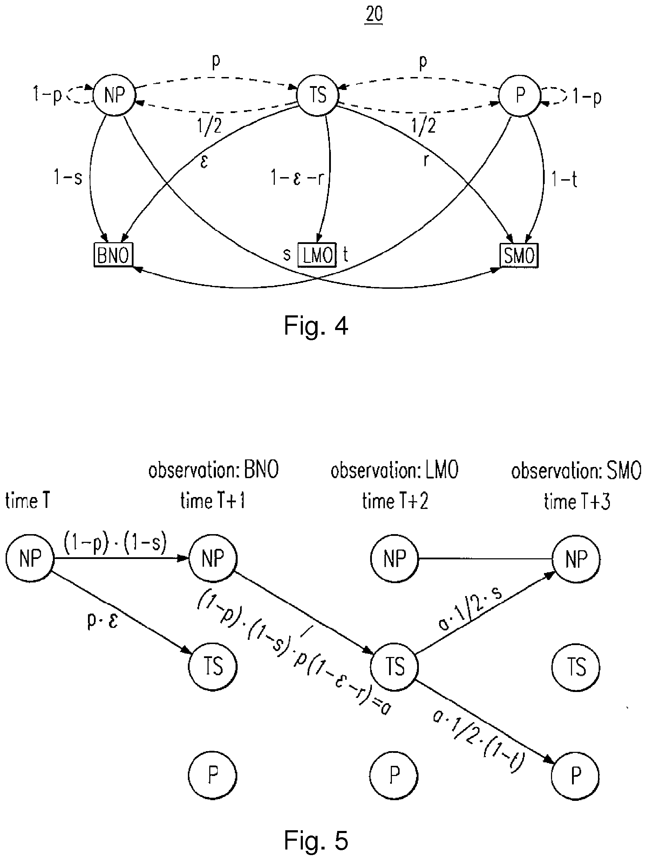

Figure 4 is a schematic representation of an implementation of a model 20 or statistical model according to the present invention.

The model 20 shown is particularly a Markov model that comprises a chain of states with transitions between the different states. The model 20 comprises two states that are a presence state P corresponding to a presence of at least one person in the area covered by the motion sensor 1, as well as a non-presence state NP reflecting the fact that nobody is present in the area covered by the motion sensor 1. The model 20 of the present invention as shown in Figure 4 advantageously comprises at least three different states that are the non-presence state NP, the presence state P and a third transition state TS.

The states NP, TS, P of the model 20 are hidden in that they cannot be directly detected by the motion sensor 1. In other words, the motion sensor 1 cannot directly measure the presence or not of individuals or persons in the covered area. The invention thus advantageously makes use of a hidden Markov model. The model 20 shown in Figure 4 is in the form of such a hidden Markov model. In said Figure, the hidden states NP, TS, P are connected with dashed arrows representing a state transition probability. The dashed arrow of a transition probability starts from a first state and ends at a second state, wherein the second state can correspond to the first state or be different from the first state. The transition probability gives the probability that, starting from the first state at time T-1, the second state shall be chosen at time T.

Starting from the non-presence state NP at time T-1, there is a state transition probability of 1-p that the state is kept unchanged at time T, as well as a transition probability of p that the next state is the transition state TS at time T. Similarly, starting from the presence state P, there is a transition probability of 1-p that the state is kept unchanged, and a transition probability of p that the next state is the transition state TS. Starting from the transition state TS, there is respectively a probability of 1/2 that the next state is the non-presence state NP or the presence state P.

Advantageously, there is no transition between the non-presence state NP and the presence state P. This means that a direct transition from the non-presence state NP to the presence state P is not possible. Rather, in order to carry out a transition between the two non-presence and presence states NP, P, it is necessary to pass through the transition state TS. The use of the transition state TS allows for a more fine-grained representation of the model. This means that the transition probability from NP to P or from P to NP is zero.

Advantageously, there is also no direct transition from the transition state TS to the transition state TS. In other words, the transition probability from TS to TS is zero. This means that the transition state TS can only be a transition that occurs between the non-presence and presence states NP, P.

Beside the hidden states that cannot be directly measured, the model 20 also comprises observations that can be measured and that are thus known. The motion sensor 1 is adapted to measure a motion within the covered area and the observation depends on the measured motion. A motion signal generated by the motion sensor 1 is related to the presence state. The model 20 comprises a set of observations that have different probabilities depending on the state of the model.

In the embodiment of Figure 4, the model comprises three observations linked to the level of motion in the area covered by the motion sensor 1. A first observation BNO reflects the fact that a no motion event is detected by the motion sensor. A second observation SMO corresponds to a small motion event, and a third observation LMO to a large motion event.

The non-dashed arrows of Figure 4 represent emission or output probabilities, i.e. they represent how likely an observation is detected by the motion sensor 1 depending on the state of the model.

In the non-presence state NP i.e. if nobody is present in the area covered by the motion sensor 1, there is a probability of no motion BNO corresponding to 1-s, and a probability s for a small motion SMO. However, the probability of a large motion LMO is 0.

In the presence state P i.e. if someone is present in the area covered by the motion sensor 1, there is a probability of 1-t for a small motion SMO and a probability of t for a no motion BNO observation. Further on, the probability of a large motion is 0.

In the transition state TS, the three observations are possible: there is a probability of 1-epsilon-r that a large motion LMO is detected, a probability of epsilon that no motion BNO is detected and a probability of r that a small motion SMO is detected. The large motion observation LMO is thus preferably only possible in the transition state TS. In the transition state TS there is a non-zero emission probability for the three observations, while in the non-presence NP and the presence P states the large motion observation LMO is not possible.

On the basis of the model 20 shown in Figure 4, the presence or not of individuals in the area covered by the motion sensor 1 can be estimated with an algorithm that provides the most likely sequence of states given a sequence of observations.

A particular embodiment of such estimation makes use of the Viterby algorithm. In this respect, Figure 5 shows an implementation of the Viterby algorithm for the model 20 of Figure 4. Figure 5 particularly shows a trellis diagram for a given sequence of observed events. The observations made at time T+1, T+2 and T+3 are respectively a no motion observation BNO, a large motion LMO observation and a small motion SMO observation.

At time T, it is assumed that nobody is present in the area covered by the motion sensor 1, which corresponds to the non-presence state NP.

At time T+1, a no motion observation BNO is measured, such that the transition probability is (1-p).(1-s) for reaching the non-presence state NP and is p.epsilon for reaching the transition state TS. The presence state P is not possible at time T+1 since no direct transition from NP to P is provided.

At time T+2, a large motion observation LMO is detected by the motion sensor 1. A transition probability from NP at time T+1 to TS at time T+2 is [(1-p).(1-s)].[p.(1-epsilon-r)]. This is in fact the only possible transition at this time. Indeed, a transition from NP at time T+1 to NP at time T+2 is not possible since the emission probability of the large motion observation LMO in the non-presence state NP is zero. Further on, a transition from TS at T+1 to NP or P at T+2 is not possible according to the model 20 of Figure 4. Further on, a transition from TS at T+1 to TS at T+2 is not possible since the transition probability from TS to TS is zero in the model 20 of Figure 4.

At time T+3, the motion sensor 1 detects a small motion observation SMO. The path to the non-presence state NP has a probability of A.1/2.s, while the path to the presence state P has a probability of A.1/2. (1-t), with A=[(1-p).(1-s)].[p.(1-epsilon-r)].

When a new observation is carried out by the motion sensor 1, the probability of the new state at time T is given by the following equation:

$$p(new\ state) = p(old\ state).t(old\ state,\ new\ state).e(new\ observation,\ new\ state)$$

with p(old state) the probability of the old state at T-1, t(old state, new state) the transition probability from the old state to the new state, and
e(new observation, new state) the emission probability of the new observation for the new state

Then, for each state, the path with the highest probability is selected. The use of a hidden Markov model thus allows for estimating presence state from motion data.

According to the invention, the probability of being in the presence state P or non-presence state NP depends on the observed motion. So, the modified behavior of the motion sensor 1 is a behavior that adapts to the actual conditions simply measuring the actual emission and transition probabilities while operating. The invention preferably proposes an estimation of the presence state with a Markov model. The invention can be based on a mathematical model - like the hidden Markov model - that considers the fact that in order to switch from the presence state P to the no presence state NP, the system has to go through a transition state TS where large motion most likely occurs. The hidden Markov model can quite accurately determine the correct state even with loosely correct parameters, making it robust in different operating environments.

The basic idea of the invention is that people do not appear from thin air. Correspondingly, transitions between the presence and non-presence states require motion. Preferably, it can be assumed that the motion during this transition is often large or huge. This is why a switch between the presence state P and the no presence state NP requires a passage through the transition state TS. This models the fact that motion is needed for the state to change between presence and no presence.

According to the invention, the observations BNO, LMO, SMO are identified by some thresholds like the first no motion threshold and the second large motion threshold mentioned above. This is different from the state of the art approach in which a presence is detected or not based on one threshold, i.e. motion/presence is detected when the signal from the sensing element exceeds said one threshold.

Further on, in the state of the art the threshold is defined at the time of installation following some general guidelines, and a careful choice of threshold and timer delay is important to minimize discomfort - light turning off when there is presence but no motion - and power consumption - light remaining on after the last person left the room. In the present invention, no configuration is necessary because of the determination of the most likely sequence of states depending on the observations, i.e. based on the transition probabilities and the emission probabilities. Advantageously, these probabilities are inferred according to the readings of the motion sensor, such that no configuration should be necessary.

The system can learn because the Viterbi algorithm provides the most likely sequence of states given the observations: «future» observations do affect the most likely states of the «past». Thus, extracting the estimated states a bit later improves the accuracy of the hidden state estimation. The statistic distributions can be correctly captured.

The thresholds can be loosely determined while still obtaining the correct estimation of the presence state. Although dynamic behaviour suffers, that's why it is possible to improve the behaviour directly from the sensor readings.

The used algorithm, e.g. the Viterby algorithm shown in Figure 5, updates the probability of being in the presence state P or non-presence state NP according to the observed motion. It does so using instantaneous values of the motion signal - very similar to the normal threshold and timer delay approach of the state of the art - but also a moving average - e.g. the average over 5 seconds slots. The reaction to instantaneous values provides the responsiveness to large motion and it is possible to determine the threshold that defines such an event, like e.g. "max value/2". On the other hand "continuous" motion above another threshold (this time considering the moving average) will lead to a change of the estimated state (from non-presence to presence) after a certain number of time slots.

The implementation of the algorithm of the invention can try to keep the statistical distribution of the observations as close as possible to the emission probabilities that are hardcoded in the software.

Also, the algorithm can take into consideration additional information - like user complaining - in order to change the emission probabilities, and the thresholds accordingly. For example if the sensor 1 estimates that the room is vacant and the light is turned off, the user can complain by waving his hands and the sensor understands it made a mistake and updates the parameters of the Markov model accordingly. The user thus can complain: if the light is turning off, the user can wave his hand and thus generate an event whose probability is extremely low (motion while fading) this is an additional type of observation that resets the probability to 1 (certain) and allows fine tuning of the emission matrix. The system in this way can adapt to the habits of the user, and particularly to an active user or a static user. This rudimental interaction with the user provides additional information to fine tune the hidden Markov model 20 parameters.

Additionally the transition probabilities can be measured during operation and adapted to the actual operating condition.

In the followings, some examples are shown as how, depending on the motion detection history, the sensor according to the invention changes its behaviour. This behaviour change is related to how the thresholds, emission and transition probabilities are adapted.

1. Office application; a user that spends most of his time sitting with small motions and seldom goes away from the desk; in this condition the system will observe a few TS-NP transitions and roughly the same number of TS-P transitions. The system can count these transitions and update the transition probabilities accordingly. In the same situation, it can happen that the user doesn't move much (because he types a lot or reads long documents remaining always in the same position), then the algorithm might make a wrong estimation and think that nobody is there and turns off the light; the user can thus complain, waving one hand generating a very unlikely situation which the system uses to adjust the emission probabilities, correctly identifying that those long periods of inactivity are indeed a presence state.

2. Office application with additional people moving; in this scenario, a person stays at his desk for long periods, but there are other people moving around; in this condition there will be few TS-NP and much more TS-P transitions. The system can count these transitions and update the transition probabilities, so that now after a large motion the system is more likely to keep the light on for a longer time. This because it is more probable that someone is still there.

3. Corridor application; in this case the vast majority of transitions from TS will end up in NP. Indeed, corridors are usually empty except when someone is going through them, very seldom people stop in corridors. Also in this case the transition probabilities can be measured and used to determine what the most likely state is.

Changing the transition probabilities affects how quickly or slowly the light will turn off; in the office applications it will naturally take more time for the light to turn off after a large motion; in the corridor application, the light will turn off much more quickly.

The Markov model used here gives an estimation of the most likely state given the observations, the additional intelligence in choosing the parameters of the Markov model slightly changes its behaviour in order to make it more comfortable (more stable, slow changing) or more efficient (more reactive, faster turn-off). It has to be noted that turning off the light source 4 can consist in dimming the light source 4 progressively over a turn-off duration.

An important aspect of the invention is that without the third transition state TS, the estimation will not have the locking characteristic that it is necessary to capture the fact that people do not appear from thin air, but have to move in/out of an environment for the presence state P to change.

Monitoring the estimated transitions from TS to P or NP can tell whether it is an office application or a corridor application. The transition matrix can then be adapted accordingly.

Monitoring the transitions P->TS->NP and the other way round and correlating them with the observations gives additional information about the installation e.g. whether it is likely that the change of state can happen without a large motion.

A preferred application is an LED module with a microcontroller (not shown), so that the presence detection requires only the addition of the sensing element, possibly mounted on the LED module itself. The algorithm used to determine the most likely state can be implemented in said microcontroller A standalone sensor is also feasible.

The presence of a daylight sensor is useful for a better learning of the hidden Markov model parameters. This can be done through "interaction" with the user. In this respect, an "Interaction" means that the sensor estimates that the room is vacant and turns off the light. The user can then complain as shown above by e.g. waving his hands and the sensor understands it made a mistake and updates the parameters of the Markov model accordingly. If the light is not necessary (e.g. because there is already enough natural light) the new information on the model's parameters is not so reliable, hence the need of a daylight sensor.

The present invention is advantageous in that it is not necessary to define at the time of installation the timer delay together with the threshold.

Further on, if a person does not generate a signal large enough within the timer delay, the light will go off according to the state of the art although the person is still in the area covered by the sensor. The present invention is advantageous in that in such a case the light stays on.

With the present invention, it is possible to turn off the light when a user has left the covered area, i.e. when no presence is detected. On the other hand, according to the state of the art the light stays on for the whole timer delay, which implies a waste of energy.

Also, the parameters of the models that are the transition and the emission probabilities are inferred according to the readings of the motion sensor and some empirical observations related to the practical meaning of the different parameters. Therefore no configuration should be necessary.

The system could be helped though, putting it on the right track by e.g. informing the system what kind of application is currently used. Applications can be e.g. corridor applications or office applications. In the case of a corridor application, the system would not need to infer the transition matrix but could still make small changes to better adapt to the actual usage of the corridor.

**Claims**

1. Method for identifying a presence state (P) or a non-presence state (NP) of people in an area (21) covered by a motion sensor (1), wherein the motion sensor (1):

   - changes autonomously its behaviour depending on ongoing motion sensing, wherein the behaviour of the motion sensor (1) depends on the instantaneous value of a motion signal, said motion signal being measured by the motion sensor (1) and reflecting the amount of motion in the covered area (21), and on an average value of the motion signal;
   - detects a large motion (A) on the basis of the instantaneous value of the motion signal, wherein the large motion (A) is detected when the instantaneous value of the motion signal is above a first threshold value (M);
   - detects a no motion (B) on the basis of the average motion signal, wherein no motion (B) is detected when the average motion signal is lower than a second threshold value (m);
   - detects a small motion (C) on the basis of the average motion signal, wherein the small motion (C) is detected when the average motion signal is above a third threshold value (m'); and
   - identifies the presence state (P) when a counter reaches an upper threshold, and the non-presence state (NP) when the counter reaches the value zero; and

   wherein the counter, preferably initialized at value zero, is increased by a value z when a large motion (A) is detected, is decreased by a value x when no motion (B) is detected, and is increased by a value y when a small motion (C) is detected.

2. Method according to claim 1,
   wherein the motion sensor (1) changes autonomously its behaviour depending on the detection of large motion (A), no motion (B) and small motion (C).

3. Method according to any one of the preceding claims,
   wherein the upper threshold corresponds to the value z.

4. Method according to any of the preceding claims,
   wherein the motion sensor (1) changes autonomously its behaviour by modifying at least one of the first threshold (M), the second threshold (m), the third threshold (m'), the value z, the value x and the value y.

5. Method according to any one of the preceding claims,
   wherein the behaviour of the motion sensor (1) is adapted by decreasing the value z and/or increasing the value x in case the counter reaches zero after i) an initialization of the counter at the value zero, and ii) a detected large motion (A) followed by iii) a succession of detected no motions (B).

**6.** Method according to any one of the preceding claims,
wherein the behaviour of the motion sensor (1) is adapted by decreasing the first threshold (M) in case the counter reaches zero after i) an initialization of the counter at the value zero, and ii) a detected large motion (A) followed by iii) a succession of detected no and/or small motions (B, C).

**7.** Method according to any one of the preceding claims,
wherein the behaviour of the motion sensor (1) is adapted by decreasing the first threshold (M) in case the counter reaches the value z after i) an initialization of the counter at the value zero and ii) a succession of detected no and/or small motions (B, C) without any detected large motion (A).

**8.** Method according to any one of the preceding claims,
wherein the behaviour of the motion sensor (1) is adapted by increasing the second threshold (m) in case no motion (B) has not been detected since a predetermined time, e.g. since more than one day.

**9.** Method according to any one of the preceding claims,
wherein a light source (4) coupled with the motion sensor (1) is turned on if the presence state (P) is identified, and the light source (4) is turned off if the non-presence state (NP) is identified.

**10.** Motion sensor (1) for identifying a presence state (P) or a non-presence state (NP) of people in an area (21) covered by the motion sensor (1), the motion sensor comprising a counter, preferably initialized at value zero, wherein the motion sensor (1) is adapted to:

- change autonomously its behaviour depending on ongoing motion sensing, wherein the behaviour of the motion sensor (1) depends on the instantaneous value of a motion signal, said motion signal being measured by the motion sensor (1) and reflecting the amount of motion in the covered area (21), and on an average value of the motion signal;
- detect a large motion (A) on the basis of the instantaneous value of the motion signal, wherein the large motion (A) is detected when the instantaneous value of the motion signal is above a first threshold value (M);
- detect a no motion (B) on the basis of the average motion signal, wherein no motion (B) is detected when the average motion signal is lower than a second threshold value (m);
- detect a small motion (C) on the basis of the average motion signal, wherein the small motion (C) is detected when the average motion signal is above a third threshold value (m');
- increase the counter by a value z when a large motion (A) is detected;
- decrease the counter by a value x when no motion (B) is detected;
- increase the counter by a value y when a small motion (C) is detected;
- identify the presence state (P) when the counter reaches an upper threshold; and
- identify the non-presence state (NP) when the counter reaches the value zero.

**11.** System (10) comprising a motion sensor (1) according to claim 10, and controlling means (2) connected to the motion sensor (1) for controlling lighting means (4),
wherein the controlling means (2) is adapted to control the lighting means (4) depending on a presence state (P) or a non-presence state (NP) identified by a motion sensor (1).

**12.** System (10) according to claim 11,
wherein the controlling means (2) is adapted to switch on the lighting means if the presence state (P) is detected and to switch it off if the non-presence state (NP) is detected.

**Patentansprüche**

**1.** Verfahren zum Identifizieren eines Anwesenheitszustands (P) oder eines Abwesenheitszustands (NP) von Personen in einem Bereich (21), der von einem Bewegungssensor (1) erfasst wird, wobei der Bewegungssensor (1):

- sein Verhalten in Abhängigkeit von laufender Bewegungserfassung selbständig ändert, wobei das Verhalten des Bewegungssensors (1) vom Momentanwert eines Bewegungssignals, wobei das Bewegungssignal vom Bewegungssensor (1) gemessen wird und das Maß von Bewegung im erfassten Bereich (21) widerspiegelt, und von einem Mittelwert des Bewegungssignals abhängt;
- eine große Bewegung (A) auf der Basis des Momentanwerts des Bewegungssignals detektiert, wobei die große Bewegung (A) detektiert wird, wenn der Momentanwert des Bewegungssignals über einem ersten Schwellenwert (M) liegt;
- eine Nichtbewegung (B) auf der Basis des Bewegungssignal-Mittelwerts detektiert, wobei Nichtbewegung (B) detektiert wird, wenn der Bewegungssignal-Mittelwert unter einem zweiten Schwellenwert liegt (m);
- eine kleine Bewegung (C) auf der Basis des Bewegungssignal-Mittelwerts detektiert, wobei die kleine Bewegung (C) detektiert wird, wenn der Bewegungssignal-Mittelwert über einem dritten Schwellenwert (m') liegt; und
- den Anwesenheitszustand (P) identifiziert, wenn ein Zähler eine obere Schwelle erreicht, und den Abwesenheitszustand (NP), wenn der Zähler den Wert Null erreicht; und

wobei der Zähler, der vorzugsweise beim Wert Null initialisiert wird, um einen Wert z erhöht wird, wenn eine große Bewegung (A) detektiert wird, um einen Wert x herabgesetzt wird, wenn Nichtbewegung (B) detektiert wird, und um einen Wert y erhöht wird, wenn eine kleine Bewegung (C) detektiert wird.

2. Verfahren nach Anspruch 1,
wobei der Bewegungssensor (1) sein Verhalten in Abhängigkeit von der Detektion von großer Bewegung (A), Nichtbewegung (B) und kleiner Bewegung (C) selbständig ändert.

3. Verfahren nach einem der vorhergehenden Ansprüche,
wobei die obere Schwelle dem Wert z entspricht.

4. Verfahren nach einem der vorhergehenden Ansprüche,
wobei der Bewegungssensor (1) sein Verhalten durch Modifizieren mindestens eines von der ersten Schwelle (M), der zweiten Schwelle (m), der dritten Schwelle (m'), dem Wert z, dem Wert x und dem Wert y selbständig ändert.

5. Verfahren nach einem der vorhergehenden Ansprüche,
wobei das Verhalten des Bewegungssensors (1) durch Herabsetzen des Wertes z und/oder Erhöhen des Wertes x angepasst wird, falls der Zähler nach i) einer Initialisierung des Zählers beim Wert Null und ii) einer detektierten großen Bewegung (A), gefolgt von iii) einer Aufeinanderfolge von detektierten Nullbewegungen (B) null erreicht.

6. Verfahren nach einem der vorhergehenden Ansprüche,
wobei das Verhalten des Bewegungssensors (1) durch Herabsetzen der ersten Schwelle (M) angepasst wird, falls der Zähler nach i) einer Initialisierung des Zählers beim Wert Null und ii) einer detektierten großen Bewegung (A), gefolgt von iii) einer Aufeinanderfolge von detektierten Nicht- und/oder kleinen Bewegungen (B, C) null erreicht.

7. Verfahren nach einem der vorhergehenden Ansprüche,
wobei das Verhalten des Bewegungssensors (1) durch Herabsetzen der ersten Schwelle (M) angepasst wird, falls der Zähler nach i) einer Initialisierung des Zählers beim Wert Null und ii) einer Aufeinanderfolge von detektierten Nicht- und/oder kleinen Bewegungen (B, C) ohne jegliche detektierte große Bewegung (A) den Wert z erreicht.

8. Verfahren nach einem der vorhergehenden Ansprüche,
wobei das Verhalten des Bewegungssensors (1) durch Erhöhen der zweiten Schwelle (m) angepasst wird, falls seit einer vorbestimmten Zeit, z. B. seit mehr als einem Tag, keine Nichtbewegung (B) detektiert wurde.

9. Verfahren nach einem der vorhergehenden Ansprüche,
wobei eine Lichtquelle (4), die mit dem Bewegungssensor (1) gekoppelt ist, eingeschaltet wird, wenn der Anwesenheitszustand (P) identifiziert wird, und die Lichtquelle (4) ausgeschaltet wird, wenn der Abwesenheitszustand (NP) identifiziert wird.

10. Bewegungssensor (1) zum Identifizieren eines Anwesenheitszustands (P) oder eines Abwesenheitszustands (NP) von Personen in einem Bereich (21), der vom Bewegungssensor (1) erfasst wird, wobei der Bewegungssensor einen Zähler umfasst, der vorzugsweise beim Wert Null initialisiert wird, wobei der Bewegungssensor (1) so ausgelegt ist, dass er:

- sein Verhalten in Abhängigkeit von laufender Bewegungserfassung selbständig ändert, wobei das Verhalten des Bewegungssensors (1) von einem Momentanwert eines Bewegungssignals, wobei das Bewegungssignal vom Bewegungssensor (1) gemessen wird und das Maß von Bewegung im erfassten Bereich (21) widerspiegelt, und von einem Mittelwert des Bewegungssignals abhängt;
- eine große Bewegung (A) auf der Basis des Momentanwerts des Bewegungssignals detektiert, wobei die große Bewegung (A) detektiert wird, wenn der Momentanwert des Bewegungssignals über einem ersten Schwellenwert (M) liegt;
- eine Nichtbewegung (B) auf der Basis des Bewegungssignal-Mittelwerts detektiert, wobei Nichtbewegung (B) detektiert wird, wenn der Bewegungssignal-Mittelwert unter einem zweiten Schwellenwert liegt (m);
- eine kleine Bewegung (C) auf der Basis des Bewegungssignal-Mittelwerts detektiert, wobei die kleine Bewegung (C)detektiert wird, wenn der Bewegungssignal-Mittelwert über einem dritten Schwellenwert (m') liegt;
- den Zähler um einen Wert z erhöht, wenn eine große Bewegung (A) detektiert wird;
- den Zähler um einen Wert x herabsetzt, wenn Nichtbewegung (B) detektiert wird;
- den Zähler um einen Wert y erhöht, wenn eine kleine Bewegung (C) detektiert wird;
- den Anwesenheitszustand (P) identifiziert, wenn der Zähler eine obere Schwelle erreicht; und
- den Abwesenheitszustand (NP) identifiziert, wenn der Zähler den Wert Null erreicht.

**11.** System (10), umfassend einen Bewegungssensor (1) nach Anspruch 10 und ein Steuermittel (2), das mit dem Bewegungssensor (1) verbunden sind, zum Steuern von Beleuchtungsmitteln (4),
wobei das Steuermittel (2) so ausgelegt ist, dass es die Beleuchtungsmittel (4) in Abhängigkeit von einem Anwesenheitszustand (P) oder einem Abwesenheitszustand (NP) steuert, der von einem Bewegungssensor (1) detektiert wird.

**12.** System (10) nach Anspruch 11,
wobei das Steuermittel (2) so ausgelegt ist, dass es die Beleuchtungsmittel einschaltet, wenn der Anwesenheitszustand (P) detektiert wird, oder es ausschaltet, wenn der Abwesenheitszustand (NP) detektiert wird.


**Revendications**

**1.** Procédé pour identifier un état de présence (P) ou un état de non présence (NP) de personnes dans une zone (21) couverte par un capteur de mouvement (1), dans lequel le capteur de mouvement (1) :

- change de manière autonome son comportement en fonction de la détection de mouvement en cours, dans lequel le comportement du capteur de mouvement (1) dépend de la valeur instantanée d'un signal de mouvement, ledit signal de mouvement étant mesuré par le capteur de mouvement (1) et reflétant la quantité de mouvement dans la zone couverte (21), et d'une valeur moyenne du signal de mouvement ;
- détecte un grand mouvement (A) sur la base de la valeur instantanée du signal de mouvement, dans lequel le grand mouvement (A) est détecté lorsque la valeur instantanée du signal de mouvement est au-dessus d'une première valeur de seuil (M) ;
- détecte une absence de mouvement (B) sur la base du signal de mouvement moyen, dans lequel l'absence de mouvement (B) est détectée lorsque le signal de mouvement moyen est inférieur à une deuxième valeur de seuil (m) ;
- détecte un petit mouvement (C) sur la base du signal de mouvement moyen, dans lequel le petit mouvement (C) est détecté lorsque le signal de mouvement moyen est au-dessus d'une troisième valeur de seuil (m') ; et
- identifie l'état de présence (P) lorsqu'un compteur atteint un seuil supérieur, et l'état de non présence (NP) lorsque le compteur atteint la valeur zéro ; et

dans lequel le compteur, de préférence initialisé à la valeur zéro, est augmenté d'une valeur z lorsqu'un grand mouvement (A) est détecté, est diminué d'une valeur x lorsque l'absence de mouvement (B) est détectée, et est augmenté d'une valeur y lorsqu'un petit mouvement (C) est détecté.

**2.** Procédé selon la revendication 1,
dans lequel le capteur de mouvement (1) change de manière autonome son comportement en fonction de la détection d'un grand mouvement (A), d'une absence de mouvement (B) et d'un petit mouvement (C).

**3.** Procédé selon l'une quelconque des revendications précédentes,
dans lequel le seuil supérieur correspond à la valeur z.

**4.** Procédé selon l'une quelconque des revendications précédentes,
dans lequel le capteur de mouvement (1) change de manière autonome son comportement en modifiant au moins l'un du premier seuil (M), du deuxième seuil (m), du troisième seuil (m'), de la valeur z, de la valeur x et de la valeur y.

**5.** Procédé selon l'une quelconque des revendications précédentes,
dans lequel le comportement du capteur de mouvement (1) est adapté en diminuant la valeur z et/ou en augmentant la valeur x dans le cas où le compteur atteint zéro après i) une initialisation du compteur à la valeur zéro, et ii) la détection d'un grand mouvement (A) suivie iii) d'une succession de détections d'absence de mouvement (B).

**6.** Procédé selon l'une quelconque des revendications précédentes,
dans lequel le comportement du capteur de mouvement (1) est adapté en diminuant le premier seuil (M) dans le cas où le compteur atteint zéro après i) une initialisation du compteur à la valeur zéro, et ii) la détection d'un grand mouvement (A) suivie iii) d'une succession de détections d'absence de mouvement et/ou de petits mouvements (B, C).

**7.** Procédé selon l'une quelconque des revendications précédentes,
dans lequel le comportement du capteur de mouvement (1) est adapté en diminuant le premier seuil (M) dans le cas où le compteur atteint la valeur z après i) une initialisation du compteur à la valeur zéro et ii) une succession de détections d'absence de mouvement et/ou de petits mouvements (B, C) sans détection d'un quelconque grand mouvement (A).

**8.** Procédé selon l'une quelconque des revendications précédentes,
dans lequel le comportement du capteur de mouvement (1) est adapté en augmentant le deuxième seuil (m) dans le cas où une absence de mouvement (B) n'a pas été détectée depuis un temps prédéterminé, par exemple depuis plusieurs jours.

**9.** Procédé selon l'une quelconque des revendications précédentes,
dans lequel une source de lumière (4) couplée au capteur de mouvement (1) est activée si l'état de présence (P) est identifié, et la source de lumière (4) est désactivée si l'état de non présence (NP) est identifié.

**10.** Capteur de mouvement (1) pour identifier un état de présence (P) ou un état de non présence (NP) de personnes dans une zone (21) couverte par le capteur de mouvement (1), le capteur de mouvement comprenant un compteur, de préférence initialisé à la valeur zéro, dans lequel le capteur de mouvement (1) est conçu pour :

- changer de manière autonome son comportement en fonction de la détection de mouvement en cours, dans lequel le comportement du capteur de mouvement (1) dépend de la valeur instantanée d'un signal de mouvement, ledit signal de mouvement étant mesuré par le capteur de mouvement (1) et reflétant la quantité de mouvement dans la zone couverte (21), et d'une valeur moyenne du signal de mouvement ;
- détecter un grand mouvement (A) sur la base de la valeur instantanée du signal de mouvement, dans lequel le grand mouvement (A) est détecté lorsque la valeur instantanée du signal de mouvement est au-dessus d'une première valeur de seuil (M) ;
- détecter une absence de mouvement (B) sur la base du signal de mouvement moyen, dans lequel l'absence de mouvement (B) est détectée lorsque le signal de mouvement moyen est inférieur à une deuxième valeur de seuil (m) ;
- détecter un petit mouvement (C) sur la base du signal de mouvement moyen, dans lequel le petit mouvement (C) est détecté lorsque le signal de mouvement moyen est au-dessus d'une troisième valeur de seuil (m') ;
- augmenter le compteur d'une valeur z lorsqu'un grand mouvement (A) est détecté ;
- diminuer le compteur d'une valeur x lorsqu'une absence de mouvement (B) est détectée ;
- augmenter le compteur d'une valeur y lorsqu'un petit mouvement (C) est détecté ;
- identifier l'état de présence (P) lorsque le compteur atteint un seuil supérieur ; et
- identifier l'état de non présence (NP) lorsque le compteur atteint la valeur zéro.

**11.** Système (10) comprenant un capteur de mouvement (1) selon la revendication 10, et des moyens de commande (2) connectés au capteur de mouvement (1) pour commander des moyens d'éclairage (4),
dans lequel les moyens de commande (2) sont conçus pour commander les moyens d'éclairage (4) en fonction d'un état de présence (P) ou d'un état de non présence (NP) identifié par un capteur de mouvement (1).

**12.** Système (10) selon la revendication 11,
dans lequel les moyens de commande (2) sont conçus pour activer les moyens d'éclairage si l'état de présence (P) est détecté et pour les désactiver si l'état de non présence (NP) est détecté.

Fig. 1

Fig. 2

Fig. 3a

Fig. 3b

Fig. 3c

<u>20</u>

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014379305 A1
- US 2006125624 A1
- EP 1311142 A1
- CH 683478 A5
- US 2013069543 A1